# EUROPEAN PATENT SPECIFICATION

(11) **EP 2 103 830 B1**
(45) Date of publication and mention of the grant of the patent: **29.02.2012**
(21) Application number: 08425179.2
(22) Date of filing: 19.03.2008
(51) Int. Cl.: F16D 65/14, F16H 25/22, F16H 25/20

(54) **Linear electromechanical actuator**
Linearer elektromechanischer Aktuator
Actionneur linéaire électromécanique

(43) Date of publication of application: 23.09.2009
(73) Proprietor: Umbra Cuscinetti S.p.A., 06034 Foligno (PG) (IT)
(72) Inventor: Perni, Federico, 06039 Trevi (PG) (IT); Pizzoni, Luciano, 06034 Foligno (PG) (IT); Speziali, Stefano, 06034 Foligno (PG) (IT); Lampart, Bjorn Hendrik, 76137 Karlsruhe (DE)
(74) Representative: Lanzoni, Luciano

(56) References cited:
- EP-A- 1 589 258
- DE-A1- 19 719 510
- GB-A- 2 272 205
- US-A- 5 865 272

## Description

The present invention relates to a linear electromechanical actuator.

More in detail, the present invention relates to a linear electromechanical actuator destined to exert high axial action and it finds specific application in the field of braking systems for vehicles and in the aerospace industry.

Currently known linear electromechanical actuators comprise an electric motor connected, through a screw-nut screw transmission, to a thruster able to translate along its own axis which constitutes the active member of the actuator and which, in the case of application in a braking unit, defines the pressing element whereon the braking pad is mounted.

Since the main requirement of the actuator is that the aforesaid thruster must exert a very high strength with a very low travel, it is necessary to provide a reducing stage between the motor and the thruster to multiply the torque from the motor to the thruster, with a matching reduction in the velocity of rotation. Unless it is reduced, the velocity of rotation of traditional electric motors would cause excessive velocity of translation and excessive travel of the thruster, as well as insufficient thrust, leading to operating condition that are incompatible with the envisioned application.

In known actuators, this reduction stage is obtained by means of gear trains, belt transmissions or epicycloid gear sets, the latter arranged on multiple consecutive stages according to the total reduction ratio to be obtained, and they are generally employed in the configuration with internal sun wheel connected to the motor, and planet gear holder connected to the screw or nut screw of the actuator. This configuration allows the highest possible reduction ratio.

Some examples of embodiments of linear electromechanical actuators used in the US Patent US 4,850,457, which discloses a braking caliper actuated by a linear electromechanical actuator in accordance with the above description, and in the US Patent US 6,412,610 which shows the presence of two consecutive reduction stages obtained by means of coaxial epicycloid gear mechanisms. In both cases, the screw-nut screw coupling is of the ball screw type.

**Other examples of linear electromechanical actuators are disclosed in** US5865272**,** EP1589258**,** GB2272205 **and** DE 19719510 A1**.**

Linear electromechanical actuators present some important drawbacks.

The use of epicycloid gear sets in succession determines large bulk, which prevents the installation of the actuator in situations in which the available space is very limited, such as motorcycle brake calipers. Such an installation would be made possible only with a reduction in the dimensions of the actuator, hence under-dimensioning the reduction stage, but this would cause the inadequacy of the performance of the actuator, which would thus be incapable of serving its required functions.

Moreover, the adoption of epicycloid gear sets considerably increases the complexity of the actuator, and consequently its costs of production.

A technical task of the present invention is to make available an electromechanical actuator that if free of the aforementioned drawbacks.

Within said technical task, the main object of the invention is make available a linear electromechanical actuator that is able to exercise a high axial thrust and that at the same time has small bulk.

A further object of the invention is to make available a linear electromechanical actuator that is simple and economical to construct.

These objects and others beside, which shall emerge hereafter in the present description, are substantially achieved by an electromechanical actuator having the characteristics expressed in claim 1 and/or in one or more of the claims which depend thereon.

A description shall now be provided, purely by way of non limiting example, of a preferred but not exclusive embodiment of a linear electromechanical actuator according to the present invention and to the accompanying figures, in which:
- figure 1A shows a perspective view of an actuator according to the present invention according to a first embodiment and according to a first operative configuration;
- figure 1B shows a perspective view of the actuator of figure 1 according to a second operative configuration;
- figure 2A shows a sectioned view of the actuator of figure 1A according to the first operative configuration;
- figure 2B shows a sectioned view of the actuator of figure 1A according to the second operative configuration;
- figure 3A shows a lateral view of some components of the actuator of figure 2A according to the first operative configuration;
- figure 3B shows a lateral view of some components of the actuator of figure 2B according to the second operative configuration;
- figures 4A, 4B show the lateral views of the components illustrated respectively in figures 3A, 3B, in accordance with an embodiment variant;
- figure 5 shows a perspective explosive view of the components illustrated in figures 3A, 3b;
- figure 6A shows a sectioned view of an actuator according to the present invention, according to a second embodiment and according to a first operative configuration;
- figure 6B shows a sectioned view of the actuator of figure 6A according to a second operative configuration;
- figure 7A shows a sectioned view of an actuator according to the present invention, according to a third embodiment and according to a first operative configuration;
- figure 7B shows a sectioned view of the actuator of figure 7A according to a second operative configuration;
- figure 8A shows a sectioned view of an actuator according to the present invention, according to a fourth embodiment and according to a first operative configuration;
- figure 8B shows a sectioned view of the actuator of figure 8A according to a second operative configuration;

With reference to the accompanying figures, the reference number 1 designates in its entirety a linear electromechanical actuator according to the present invention.

The actuator 1 comprises a covering structure 2 that defines an outer case of the actuator 1 and that has cylindrical or, more generically, box-like shape.

The covering structure 2 has an opening through which projects an end of a movable translator 3 which defines the active element of the actuator 1, i.e. the portion of the actuator 1 that is to exchange forces of even high intensity with external elements of the actuator 1.

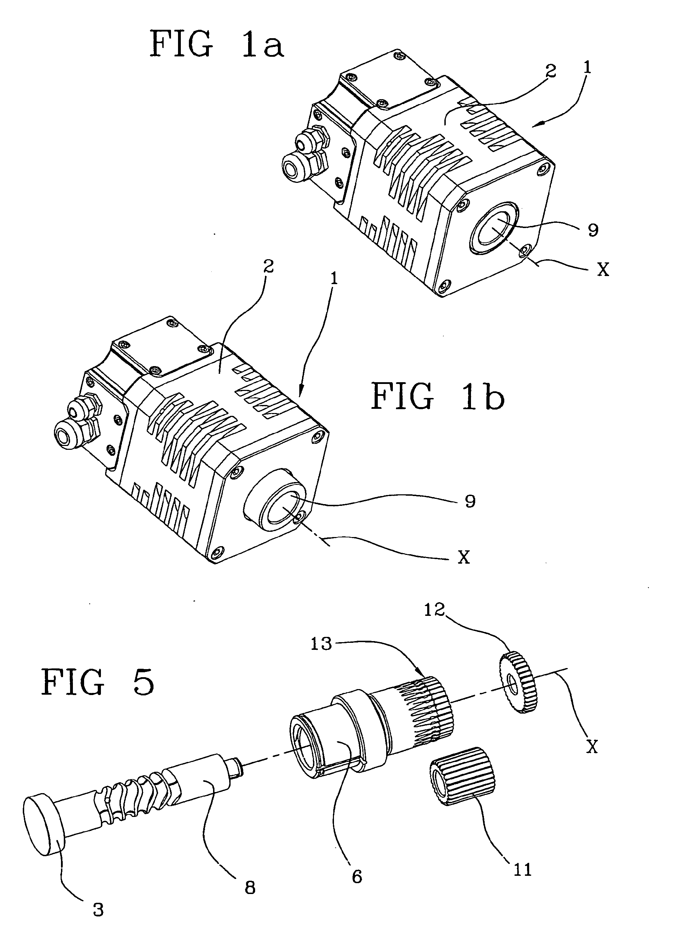

For example, the aforementioned end of the movable translator 3 can be coupled to a braking pad to exert a braking force on a disk brake. Figure 1A shows the actuator 1 with the movable translator 3 retracted, corresponding to an inactive position of the actuator 1, whilst figure 1B shows the actuator 1 with the movable translator 3 partially projecting from the covering structure 2, corresponding to an operative position of the actuator 1.

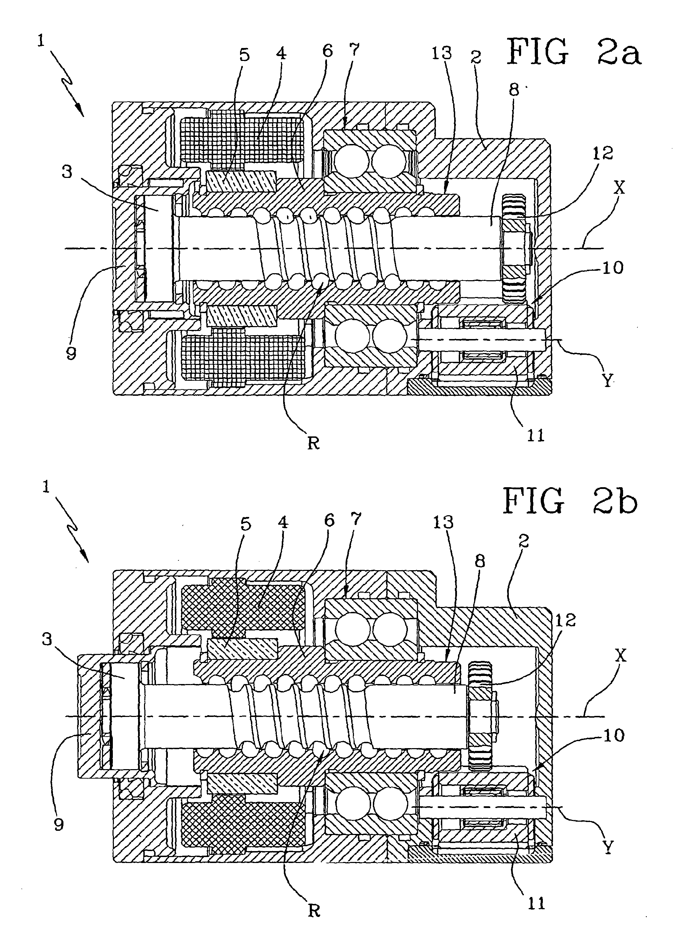

Figures 2A and 2B show a first embodiment of the actuator 1. In accordance with said figures, within the covering structure 2 is housed an electric motor having a stator 4 and a rotor 5 able to rotate around a main axis of rotation "X". Preferably, the electric motor is of the brushless type and it is controlled by an angular measurement system. In the actuator 1, moreover, are present sensors with hall effect sensitive to rotary magnetic field (not shown in the accompanying figures) to determine the positioning of the rotor 5 around the main axis of rotation "X".

The rotor of the electric motor is directly coupled, e.g. by means of keying, to an outer surface of a first element 6 (or first lead nut). The first element 6 has substantially annular, preferably axial-symmetric conformation, and it develops around the aforementioned main axis of rotation "X", and it is also pivotally support relative to the covering structure 2 by means of a rolling bearing 7. In the illustrated embodiment, a single rolling bearing 7 is used, which enables the rotation of the first element 6 around the main axis of rotation "X", whilst it prevents all other movement of the first element 6 in any other direction.

Therefore, the rolling bearing 7 also serves the function of thrust bearing element along a direction parallel to the main axis of rotation "X" fixing the position of the first element 6 along the main axis of rotation "X". Preferably, the rolling bearing 7 is a bearing two rows of balls flanking each other.

Within the first element 6 is inserted a second element 8 (or screw), positioned along the main axis of rotation "X" itself and, also, to rotate around the first element 6. The second element 8 is supported by the first element 6 by means of a threaded coupling with ball screw obtained between the first and the second element 6, 8. Said threaded coupling with ball screw enables the second element 8 to advance along the main axis of rotation "X", and hence to be inserted/extracted partially relative to the first element 6, consequently to a mutual rotation of the second element 8 relative to the first element 6. In other words, the second element 8 can follow a helical trajectory around the main axis of rotation "X", i.e. a roto-translation movement.

In the accompanying figures, the threaded coupling with ball screw is represented with the reference "R".

The second element 8 defines the aforementioned movable translator 3, and more in detail on a front end of the second element 8 is pivotally fitted on a coating element 9 which is able to transfer the thrust exerted by the second element 8 absorbing its rotating movement, hence preventing rubbings of the second element 8 with the elements with which it is meant to come operatively in contact. The coating element 9 can be coupled to the second element 8 by means of a cage with rollers or by means of a thrust bearing.

Advantageously, the actuator 1 comprises actuating means 10 active between the first element 6 and the second element 8 to determine a velocity of rotation of the second element 8 around the main axis of rotation "X" and, hence, able to determine the velocity of advance of the second element 8 along the main axis of rotation "X".

According to the embodiment illustrated in figures 2A, 2B and in figure 5, the actuating means 10 comprise a gear mechanism interposed between the first and the second element 6, 8. More in detail, the gear mechanism comprises a first toothed member 11 rotatable around an axis of rotation "Y" parallel and eccentric relative to the main axis of rotation "X", and a second toothed member 12 fastened to the second element 6. The first toothed member 11, which comprises an externally toothed roller, meshes with an external toothing 13 of the first element 6 and also meshes with the second toothed member 12. Hence, there is a continuity in the transmission of motion between the first element 6 and the second element 8, thanks to the two toothed members 11, 12.

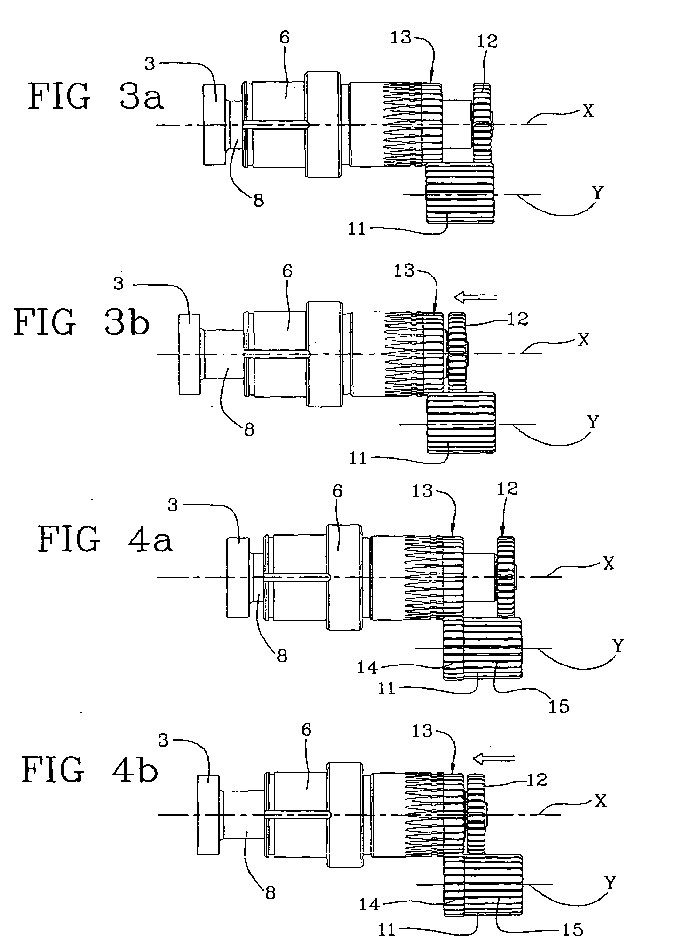

The first toothed member 11 has an axial dimension, i.e. measured along the axis of rotation "Y", such as to maintain its meshing with the second toothed member 12 during the axial displacement of the second element 8. The second toothed member 12 is integral with the second element 8 and hence it is also subject to an advancing motion along the main axis of rotation "X" as a result of the rotation of the second element 8. What is described above is clearly visible in figures 3A, 3B. In particular, figure 3A shows the second element 8 whilst it is in the rearmost position, corresponding to the inactive position of the actuator 1 shown in figures 1A and 2A. Figure 3B instead shows the second element 8 whilst it is in the forward-most position, corresponding to the operative position of the actuator 1 illustrated in figures 1B and 2B.

The axis of rotation "Y" of the first toothed member 11 is fixed and, according to a first embodiment, not shown, there are two or more first toothed member 11, angularly position along the main axis of rotation "X" to distribute uniformly the driving actions between the first and the second element 6, 8.

In order to vary the velocity of rotation of the second element 8 relative to the first element 6, the gear mechanism achieves a non-unitary transmission ratio between the velocity of rotation of the first and the velocity of rotation of the second element 6, 8. Preferably, the aforementioned transmission ratio is between 2 and 72.

According to a first possibility, shown in figures 3A and 3B, said non unitary transmission ratio is obtained varying, relative to each other, some geometric characteristics of the outer toothing 13 of the first element 11 and of the second toothed member 12 and, in particular, the addendum and/or dedendum. The resulting transmission ratio is not unitary but nonetheless proximate to unity, with the result that the second element 8 rotates at a velocity that is proximate to that of the second element 6 (but not perfectly equal) and, hence, the advance of the second element 8 along the main axis of rotation "X" is very small and can transmit a very large force.

According to a second possibility **(not forming part of the present invention)**, shown in figures 4A and 4B, said non unitary transmission ratio is obtained providing two different toothed external areas on the first toothed member 11. A first outer area 14 meshes in fixed configuration with the outer toothing 13 of the first element 6, whilst the other external area 15, with greater axial extension, meshes with the second toothed member 12 allowing the axial displacement thereof. The difference between the primitive diameters of the toothing of the two outer areas 14, 15 determines the aforesaid non-unitary transmission ratio.

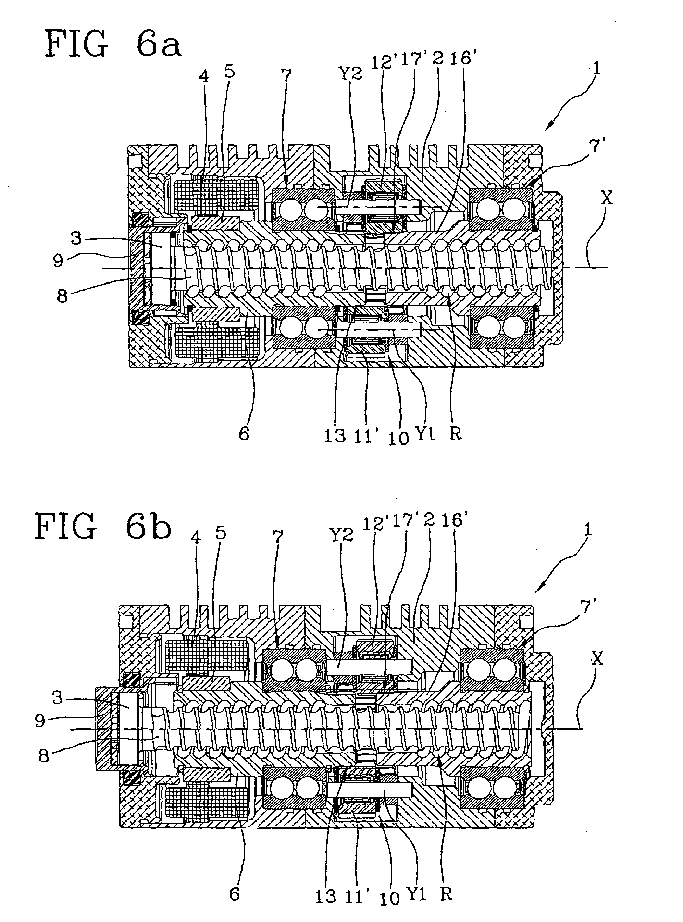

Figures 6A, 6B show an embodiment variant of the aforesaid gear mechanism. In detail, similarly with the embodiment illustrated previously, said gear mechanism comprises a first toothed member 11' that meshes with the outer toothing 13' of the first element 6, and a second toothed member 12' that meshes with the first toothed member 11'. The toothed members 11', 12' are rotatable around respective axes of rotation "Y1", "Y2", which are fixed relative to the covering structure 2 and parallel to each other. Moreover, the aforesaid axes or rotation "Y1", Y2" are parallel to the main axis of rotation "X" and positioned around it, preferably at an equal distance from the main axis of rotation "X" itself. According to embodiment variants, not shown, the actuator 1 comprises a plurality of pairs constituted by the aforementioned toothed members 11', 12', angularly positioned around the main axis of rotation "X".

In this embodiment the actuator 1 further comprises a third element 16' (or second lead nut), also pivotally coupled by screwing to the second element 8 and also rotatable relative to the covering structure 2 to rotate around the main axis of rotation "X". The actuator 1 comprises a pair of rolling bearings 7, 7', a first of which 7 pivotally supports the first element 6, whilst the other one 7' supports the third element 16'. The first and the third element 6, 16' are also active on consecutive portions of a the second element 8 (aligned along the main axis of rotation "X"), and in particular they are pivotally coupled to the aforesaid consecutive portions by means of ball screw threading. The second toothed member 12' meshes with an outer thread 17' of the third element 16' such that, between the first and the third element 6, 16', there is a kinematic continuity assured by the gear mechanism.

The two toothed members 11', 12' are mutually offset along the main axis of rotation "X" in such a way that the first toothed member 11' meshes on one side with the outer thread 13 of the first element 6 and on the other side (axially offset relative to the first side) with the second toothed member 12', whilst the second toothed member 12' meshes on one side with the first toothed member 11' and on the other side (axially offset relative to the first side) with the outer thread 17' of the third element 16'. In this configuration, a space can be provided between mutually facing ends of the first and of the third element 6, 16', to enable the two toothed members 11', 12' to mesh with each other without interfering with the aforesaid first and third element 6, 16.

The presence of the pair of toothed members 11', 12' determines the rotation in opposite directions of the first and of the third element 6, 16', whilst the threads of the first and of the third element 6, 16' are distributed according to a same direction of winding. This advantageously enables to obtain a single uniform outer thread on the second element 8, which meshes in part with the first element 6, and in part with the third element 16'. The counter rotation of the first and of the third element 6, 16' enables a reduction in the transmission ratio between the first element and the second element 8, and the size of said transmission ratio is determined by the geometry of the aforesaid first and second toothed member 11', 12' (e.g. by changing the number of teeth). Preferably, the transmission ratio between first and third element 6, 16' is between 2 and 72. The threads of the threaded coupling between first and second element 6, 8, and between second and third element 8, 16, can have the same pitch value or, alternatively, different pitch value.

Figure 6A illustrates the inactive position of the actuator 1, with the second element 8 entirely retracted inside the covering structure 2, whilst figure 6b illustrates the operative position of the actuator 1, in which the covering element 9 is at least partially exposed from the covering structure **2**. Similarly to the embodiment illustrated in figures 2A, 2B, in this case too the rotor 5 of the electric motor is directly active on the first element 6.

According to an alternative embodiment not illustrated herein, only the first toothed member 11' is provided, which meshes simultaneously with the first and the third element 6, 16', and in this case the counter rotation of said first and third element is replace by opposite threads obtained on the first and on the third element 6, 16. Consequently, it is necessary to obtain on the second element 8 two outer threads, distributed according to two opposite directions of winding and each of which can be coupled to one of the aforesaid first and third element 6, 16'.

The toothing of the toothed members 11, 12; 11', 12' and the outer threads 13, 17' can have straight teeth or helical teeth.

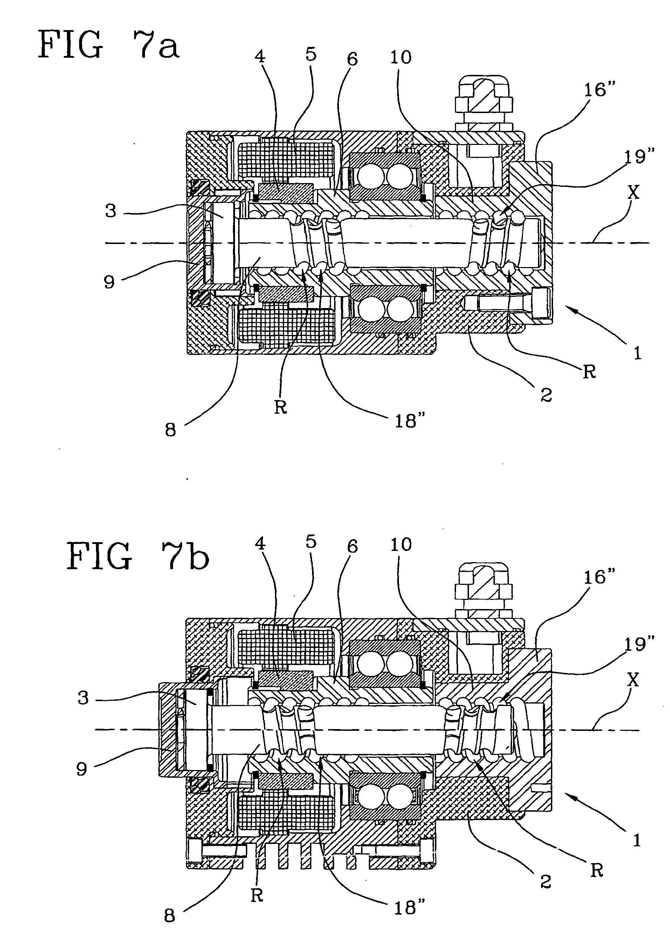

Figures 7A, 7B show an additional variant of the actuator 1 according to the invention, in which is present the third element 16" and in which said third element 16" is fastened to the covering structure 2. In this configuration, too, the third element 16" is positioned around the main axis of rotation "X" and positioned consecutively to the first element 6 along the main axis of rotation "X" itself. The third element 16" internally has a thread distributed along an opposite direction of winding relative to the inner thread of the first element 6, in order to achieve a reduction in velocity between the velocity of rotation of the first element 6, connected to the electric motor, and the velocity of rotation of the second element 8. Consequently, the second element 8 has a first and a second portion 18", 19" whereon are respectively fitted the first and the third element 6, 16" and having outer threads obtained according to opposite directions of winding.

Preferably, the inner threads of the first and of the third element 6, 16 have different pitch. The second element 8, receiving a driving torque from the first element 6 and anyway connected to the fixed third element 16", is set in rotation around the main axis of rotation "X" at a velocity determined by the values of the pitch of the aforesaid inner threads of the first and of the third element 6, 16". In this case as well, the aforesaid threads are of the ball screw type. Figure 7A shows in detail the inactive position of the actuator 1, whilst figure 7B shows the actuator 1 in the operative position.

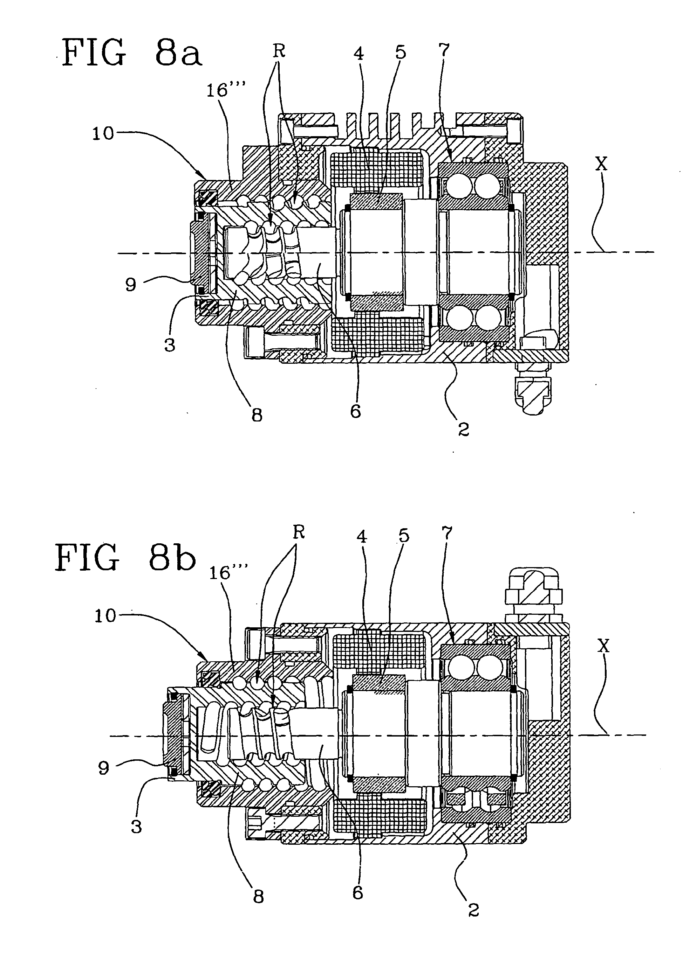

Figures 8A, 8B show an additional variant of the actuator 1 according to the present invention, in which the third element 16" is fixed and in which the second element 8 is externally fitted on the first element 6. In other words, the first element 6 (that now defines the screw) is connected to the electric motor and it is screwed inside the second element (which now defines the first lead nut), preferably by means of ball screw thread. The second element 8 in turn is screwed inside the third element 16"' (the third element still defines the second lead nut), preferably by means of a ball screw thread. In this configuration, the second element 8 has annular shape and it is interposed between the first inner element 6 and the third element 16"', fixed and external. The second element 8 thus has an inner thread and an outer thread.

To achieve a reduction in the velocity of advance of the second element 8 along the main axis of rotation "X", it is necessary that the inner and outer threads of the second element 8 are distributed according to discordant directions of winding and it is preferably that said threads have mutually different pitch. In particular, the inner thread of the second element 8 preferably has larger pitch than the outer thread.

In the configuration of figures 8A, 8B, the actuator 1 thus comprises the aforesaid three elements 6, 8, 16"', positioned coaxially to each other and coaxial to the main axis of rotation "X", which are located around each other defining a very compact structure. In adjacent position to the three elements 6, 8, 16"' is positioned the electric motor, with the rotor 5 stably connected externally to the first element 6.

It is further specified that, in the embodiments of figures 7A-7B and 8A-8B the actuating means 10 do not comprise the gear mechanisms described above, however the actuating means 10 in this case comprise the third element 16", 16"' which, by means of the threaded coupling with the second element 8, determines a different velocity of rotation of the second element from the velocity of rotation of the first element 6.

The present invention achieves the proposed objects, overcoming the drawbacks of the prior art.

The different embodiments allow a large reduction between the angular velocity of the first element, connected to the rotor of the electric motor, and the second element, defining the roto-translating thruster of the actuator. Said velocity reduction enables the actuator to obtain very high thrust forces even having available low torque values to the electric motor.

Moreover, the integration between the use of ball screw threads and the adoption of the mechanism to reduce the velocity of rotation enables to obtain such a considerable velocity reduction from the first to the second element as to allow to provide a high pitch for the threads of the first and second and second element (screw and lead nut) that enables to use ball screws having sufficiently great diameter to withstand high loads along the main axis of rotation.

The actuator of the invention is also simple and economical to construct, allowing to mount very small electric motors and not including the costly and complex epicycloid gear sets used in prior art actuators, which also considerably increase the bulk of the actuators in the radial direction.

## Claims

1. Linear electromechanical actuator, comprising:
- a covering structure (2);
- a first element (6), mounted on the covering structure (2) and rotatable around a main axis of rotation (X), said first element (6) being connectable to an electric motor to receive a driving torque;
- a second element (8), mounted on the covering structure (2) along said main axis of rotation (X) and pivotally coupled to the first element (6) by screwing to receive an advancing motion along said main axis of rotation (X) as a result of a rotation of the first element (6), said second element (8) defining a translating element of said actuator;
wherein said second element (8) is also rotatable relative to the covering structure (2) around said main axis of rotation (X), said actuator (1) further comprising actuating means (10), active at least on said second element (8) to determine a velocity of rotation of the second element (8) around said main axis of rotation (X) in such a way as to determine the velocity of advance of the second element (8) along said main axis of rotation (X);
wherein said actuating means (10) comprise gear mechanism mounted on the covering structure (2) and interposed between the first and the second element (6, 8), and
wherein said gear mechanism comprises a first toothed member (11) and a second toothed member (12), said first toothed member (11) being engaged by meshing with said first element (6), said second toothed member (12) being fastened to second element (8) and being engaged by meshing with said first toothed member (11),
the actuator being **characterized in that** said first toothed member (11) has a uniform outer toothing having such an extension, along the main axis of rotation (X), as to remain mutually meshed with **the first toothed member (11) and with** the second toothed member (12) during the displacement of the second element (8) along the main axis of rotation (X).

2. Actuator as claimed in claim 1, **characterised in that** said gear mechanism achieves a fixed, non unitary transmission ratio between the first and the second element (6, 8).

3. Actuator as claimed in claim 2, **characterised in that** said gear mechanism achieves a transmission ratio, between the first and the second element (6, 8), of between 2 and 72.

4. Actuator as claimed in claim 1, **characterised in that** said first toothed member (11) is rotatable around an axis (Y) that is parallel and eccentric relative to said main axis of rotation (X), said second toothed member (12) being rotatable around said main axis of rotation (X).

5. Actuator as claimed in claim 4, **characterised in that** the axis of rotation (Y) of the first toothed member (11) is fixed.

6. Actuator as claimed in claim 4 or 5, **characterised in that** said gear mechanism comprises a plurality of first toothed members (11), rotatable around respective axes of rotation (Y) that are parallel to said main axis of rotation (X) and positioned around said main axis of rotation (X).

7. Actuator as claimed in claim 1, **characterised in that** said first element (6) and said second toothed member (12) have respective toothings engageable by meshing with said first toothed member (11), the toothing (13) of the first element (6) and the toothing of the second toothed member (12) presenting mutually different geometric properties to obtain a different velocity of rotation between said first element (6) and said second toothed member (12).

8. Actuator as claimed in claim 7, **characterised in that** said different geometric properties are obtained modifying addendum and/or dedendum of the toothing (13) of the first element (6) relative to addendum and/or dedendum of the toothing of the second toothed member (12).

9. Linear electromechanical actuator, comprising:
- a covering structure (2);
- a first element (6), mounted on the covering structure (2) and rotatable around a main axis of rotation (X), said first element (6) being connectable to an electric motor to receive a driving torque;
- a second element (8), mounted on the covering structure (2) along said main axis of rotation (X) and pivotally coupled to the first element (6) by screwing to receive an advancing motion along said main axis of rotation (X) as a result of a rotation of the first element (6), said second element (8) defining a translating element of said actuator;
wherein said second element (8) is also rotatable relative to the covering structure (2) around said main axis of rotation (X), said actuator (1) further comprising actuating means (10), active at least on said second element (8) to determine a velocity of rotation of the second element (8) around said main axis of rotation (X) in such a way as to determine the velocity of advance of the second element (8) along said main axis of rotation (X);
wherein said actuating means (10) comprise gear mechanism mounted on the covering structure (2) and interposed between the first and the second element (6,8),
wherein said actuating means (10) comprise a third element (16'; 16"; 16'") engaged with said second element (8) by screwing around said main axis of rotation (X) in such a way that, as a result of a relative rotation between said second and third element (8, 16'; 16"; 16"'), said second element (8) undergoes a displacement along said main axis of rotation (X), the simultaneous coupling of said second element (8) with said first and third element (6, 16'; 16"; 16"') automatically determining a different velocity of rotation of the second element (8) from the velocity of rotation of the first element (6),
wherein said third element (16') is rotatable around said main axis of rotation (X), said gear mechanism being interposed between said first and third element (6, 16') to set in rotation said third element (16') as a result of the rotation of the first element (6),
wherein said gear mechanism sets in rotation said third element (16') in opposite direction to said first element (6), and
wherein said first and third element (6, 16') are fitted on respective portions of said second element (8) arranged in succession along said main axis of rotation (X),
**characterized in that** said second element (8) presents a helical thread engageable with the first and third element (6, 16') and uniformly distributed, according to a same direction of winding, on said portions of the second element (8).

10. Actuator as claimed in claim 9, **characterised in that** said gear mechanism comprises a first toothed member (11') and a second toothed member (12') rotatable around axes (Y1, Y2) that are parallel and eccentric relative to said main axis of rotation (X), said first toothed member (11') meshing with said first element (6), said second toothed member (12') meshing with said third element (16') and with said first toothed member (11').

11. Actuator as claimed in claim 10, **characterised in that** the axes of rotation (Y1, Y2) of said first and second toothed member (11', 12') are substantially equidistant from said main axis of rotation (X).

12. Actuator as claimed in one or more of the claims 9 to 12, **characterised in that** said gear mechanism achieves a fixed, non unitary transmission ratio between said first (6) and third element (16'), said transmission ratio being preferably between 2 and 72.

13. Actuator as claimed in one or more of the claims 9 to 13, **characterised in that** said third element (16') is movable exclusively by rotation around said main axis of rotation (X) and achieves, in co-operation with said first and second element (6, 8), a change in the velocity of rotation from said first element (6) to said second element (8).

14. Linear electromechanical actuator, comprising:
- a covering structure (2);
- a first element (6), mounted on the covering structure (2) and rotatable around a main axis of rotation (X), said first element (6) being connectable to an electric motor to receive a driving torque;
- a second element (8), mounted on the covering structure (2) along said main axis of rotation (X) and pivotally coupled to the first element (6) by screwing to receive an advancing motion along said main axis of rotation (X) as a result of a rotation of the first element (6), said second element (8) defining a translating element of said actuator;
wherein said second element (8) is also rotatable relative to the covering structure (2) around said main axis of rotation (X), said actuator (1) further comprising actuating means (10), active at least on said second element (8) to determine a velocity of rotation of the second element (8) around said main axis of rotation (X) in such a way as to determine the velocity of advance of the second element (8) along said main axis of rotation (X);
wherein said actuating means (10) comprise a third element (16'; 16"; 16"') **fastened to said covering structure (2) and** engaged with said second element (8) by screwing around said main axis of rotation (X) in such a way that, as a result of a relative rotation between said second and third element (8, 16 ; 16"; 16"'), said second element (8) undergoes a displacement along said main axis of rotation (X), the simultaneous coupling of said second element (8) with said first and third element (6, 16'; 16"; 16"') automatically determining a different velocity of rotation of the second element (8) from the velocity of rotation of the first element (6).

15. Actuator as claimed in claim 14, **characterised in that** said first and third element (6, 16') are fitted respectively on respective portions of said second element (8), said portions being arranged in succession along said main axis of rotation (X).

16. Actuator as claimed in claim 15, **characterised in that** said portions of the second element (8) present respective threads distributed according to mutually opposite directions of winding, said threads being engageable with corresponding threads obtained respectively on the first and on the third element (6, 16").

17. Actuator as claimed in claim 14, **characterised in that** said second element (8) is fitted on said first element (6), said third element (16"') being fitted externally to said second element (8).

18. Actuator as claimed in claim 17, **characterised in that** said second element (8) presents an inner thread, oriented towards the first element (6), and an outer thread, oriented towards the third element (16"'), said inner and outer threads being distributed according to mutually discordant directions of winding.

19. Actuator as claimed in one or more of previous claims 1 to 18, wherein said actuating means (10) impose to said second element (8) a velocity of rotation, relative to said main axis of rotation (X), that is not nil and different from the velocity of rotation of said first element (6) to enable the different velocity of rotation between first and second element (6, 8) to cause an axial displacement of the second element (8).

20. Actuator as claimed in one or more of previous claims 1 to 19, wherein said actuating means (10) determine the velocity of rotation of the second element (8) as a function of the velocity of rotation of the first element (6).

21. Actuator as claimed in one or more of previous claims 1 to 18, wherein said first element (6) is movable exclusively according to a motion of rotation around said main axis of rotation (X), said second element (8) being movable according to a screwing motion along said main axis of rotation (X) to slide relative to the first element (6) as a result of a mutual rotation between said first and second element (6, 8).

22. Actuator as claimed in one or more of previous claims 1 to 21, wherein said second element (8) is rotatably inserted within said first element (6).

23. Actuator as claimed in one or more of previous claims 1 to 22, wherein said first and second element (6, 8) are mutually coupled by means of a screw-nut screw connection.

24. Actuator as claimed in one or more of previous claims 9 to 18, wherein said second and third element (8, 16'; 16"; 16"') are mutually coupled by means of a screw-nut screw connection.

25. Actuator as claimed in claim 23 or 24, **characterised in that** said screw-nut screw connection comprises a threaded ball screw connection.

26. Actuator as claimed in one or more of previous claims 1 to 25, wherein, **characterised in that** said main axis of rotation (X) is fixed.

27. Actuator as claimed in one or more of previous claims 1 to 26, wherein, said first element (6) is stably connected, on its own outer surface, to the rotor (5) of said electric motor.

28. Actuator as claimed in one or more of previous claims 1 to 27, wherein at said first element (8) rotates coaxially to said electric motor.

29. Actuator as claimed in one or more of previous claims 1 to 28, wherein said electric motor is entirely contained within said covering structure (2).

30. Actuator as claimed in one or more of previous claims 1 to 29, wherein it comprises a covering element (9), rotatably associated to a front end of said second element (8) to transmit the thrust exerted by the second element (8) independently of the rotation of said second element (8).

31. A brake caliper for a vehicle, comprising an actuator (1) as claimed in one or more of the previous claims 1 to 30.

## Patentansprüche

1. Linearer elektromechanischer Aktuator, umfassend:
- eine Abdeckstruktur (2);
- ein erstes Element (6), das auf der Abdeckstruktur (2) befestigt und um eine Hauptrotationsachse (X) rotierbar ist, wobei das erste Element (6) mit einem Elektromotor verbindbar ist, um ein Antriebsdrehmoment zu empfangen;
- ein zweites Element (8), das auf der Abdeckstruktur (2) entlang der Hauptrotationsachse (X) befestigt ist und drehbar mit dem ersten Element (6) durch Verschraubung verkoppelt ist, um eine Vorwärtsbewegung entlang der Hauptrotationsachse (X) in Folge einer Rotation des ersten Elements (6) zu empfangen, wobei das zweite Element (8) ein Translationselement des Aktuators definiert;
wobei das zweite Element (8) zudem relativ zur Abdeckstruktur (2) um die Hauptrotationsachse (X) rotierbar ist, wobei der Aktuator (1) ferner Antriebsmittel (10) umfasst, die zumindest auf das zweite Element (8) einwirken, um derart eine Rotationsgeschwindigkeit des zweiten Elements (8) um die Hauptrotationsachse (X) zu verursachen, dass die Geschwindigkeit der Vorwärtsbewegung des zweiten Elements (8) entlang der Hauptrotationsachse (X) verursacht wird;
wobei die Antriebsmittel (10) einen Getriebemechanismus umfassen, der auf der Abdeckstruktur (2) befestigt ist und zwischen dem ersten und dem zweiten Element (6, 8) dazwischengelagert ist,
wobei der Getriebemechanismus ein erstes gezahntes Glied (11) und ein zweites gezahntes Glied (12) umfasst, wobei das erste gezahnte Glied (11) durch Einrücken in das erste Element (6) im Eingriff steht, wobei das zweite gezahnte Glied (12) am zweiten Element (8) angebracht ist und durch Einrücken in das erste gezahnte Glied (11) im Eingriff steht,
wobei der Aktuator **dadurch gekennzeichnet ist, dass** das erste gezahnte Glied (11) eine gleichmäßige äußere Zahnung aufweist, die eine solche Ausdehnung entlang der Hauptrotationsachse (X) aufweist, dass sie gegenseitig in das erste gezahnte Glied (11) und in das zweite gezahnte Glied (12) während der Verschiebung des zweiten Elements (8) entlang der Hauptrotationsachse (X) eingerückt bleibt.

2. Aktuator nach Anspruch 1, **dadurch gekennzeichnet, dass** der Getriebemechanismus ein festes, nicht-unitäres Übersetzungsverhältnis zwischen dem ersten und dem zweiten Element (6, 8) aufweist.

3. Aktuator nach Anspruch 2, **dadurch gekennzeichnet, dass** der Getriebemechanismus ein Übersetzungsverhältnis zwischen dem ersten und dem zweiten Element (6, 8) von 2 bis 72 erreicht.

4. Aktuator nach Anspruch 1, **dadurch gekennzeichnet, dass** das erste gezahnte Glied (11) um eine Achse (Y) rotierbar ist, die relativ zur Hauptrotationsachse (X) parallel und exzentrisch ist, wobei das zweite gezahnte Glied (12) um die Hauptrotationsachse (X) rotierbar ist.

5. Aktuator nach Anspruch 4, **dadurch gekennzeichnet, dass** die Rotationsachse (Y) des ersten gezahnten Glieds (11) fest ist.

6. Aktuator nach Anspruch 4 oder 5, **dadurch gekennzeichnet, dass** der Getriebemechanismus eine Vielzahl von ersten gezahnten Gliedern (11) umfasst, die um entsprechende Rotationsachsen (Y) rotierbar sind, die parallel zur Hauptrotationsachse (X) und um die Hauptrotationsachse (X) herum positioniert sind.

7. Aktuator nach Anspruch 1, **dadurch gekennzeichnet, dass** das erste Element (6) und das zweite gezahnte Glied (12) entsprechende Verzahnungen haben, die durch Einrücken in das erste gezahnte Glied (11) eingreifen können, wobei die Verzahnung (13) des ersten Elements (6) und die Verzahnung des zweiten gezahnten Elements (12) geometrische Eigenschaften aufweisen, die sich voneinander unterscheiden, um zwischen dem ersten Element (6) und dem gezahnten Glied (12) eine unterschiedliche Rotationsgeschwindigkeit zu erhalten.

8. Aktuator nach Anspruch 7, **dadurch gekennzeichnet, dass** die unterschiedlichen geometrischen Eigenschaften durch Veränderung der Zahnkopfhöhe und/oder Zahnfußhöhe der Verzahnung (13) des ersten Elements (6) relativ zur Zahnkopfhöhe und/oder Zahnfußhöhe der Verzahnung des zweiten gezahnten Glieds (12) erhalten werden.

9. Linearer elektromechanischer Aktuator, umfassend:
- eine Abdeckstruktur (2);
- ein erstes Element (6), das auf der Abdeckstruktur (2) befestigt und um eine Hauptrotationsachse (X) rotierbar ist, wobei das erste Element (6) mit einem Elektromotor verbindbar ist, um ein Antriebsdrehmoment zu empfangen;
- ein zweites Element (8), das auf der Abdeckstruktur (2) entlang der Hauptrotationsachse (X) befestigt ist und drehbar mit dem ersten Element (6) durch Verschraubung verkoppelt ist, um eine Vorwärtsbewegung entlang der Hauptrotationsachse (X) in Folge einer Rotation des ersten Elements (6) zu empfangen, wobei das zweite Element (8) ein Translationselement des Aktuators definiert;
wobei das zweite Element (8) zudem relativ zur Abdeckstruktur (2) um die Hauptrotationsachse (X) rotierbar ist, wobei der Aktuator (1) ferner Antriebsmittel (10) umfasst, die zumindest auf das zweite Element (8) einwirken, um derart eine Rotationsgeschwindigkeit des zweiten Elements (8) um die Hauptrotationsachse (X) zu verursachen, dass die Geschwindigkeit der Vorwärtsbewegung des zweiten Elements (8) entlang der Hauptrotationsachse (X) verursacht wird;
wobei die Antriebsmittel (10) einen Getriebemechanismus umfassen, der auf der Abdeckstruktur (2) befestigt ist und zwischen dem ersten und dem zweiten Element (6, 8) dazwischengelagert ist,
wobei die Antriebsmittel (10) ein drittes Element (16'; 16"; 16"') umfassen, das derart im Eingriff in das zweite Element (8) durch Verschraubung um die Hauptrotationsachse (X) steht, dass in Folge einer relativen Rotation zwischen dem zweiten und dritten Element (8, 16'; 16" , 16"') das zweite Element (8) entlang der Hauptrotationsachse (X) verschoben wird, wobei die simultane Verkopplung des zweiten Elements (8) mit dem ersten und dritten Element (6, 16'; 16"; 16"') automatisch eine Rotationsgeschwindigkeit des zweiten Elements (8) verursacht, die sich von der Rotationsgeschwindigkeit des ersten Elements (6) unterscheidet,
wobei das dritte Element (16') um die Hauptrotationsachse (X) rotierbar ist, wobei der Getriebemechanismus zwischen dem ersten und dem zweiten Element (6, 16') dazwischengelagert ist, um das dritte Element (16') in Folge der Rotation des ersten Elements (6) in Rotation zu versetzen,
wobei der Getriebemechanismus das dritte Element (16) in eine zum ersten Element (6) gegensätzliche Richtung in Rotation versetzt,
wobei das erste und dritte Element (6, 16') an entsprechende Abschnitte des zweiten Elements (8) angepasst sind, die aufeinanderfolgend entlang der Hauptrotationsachse (X) angeordnet sind,
**dadurch gekennzeichnet, dass** das zweite Element (8) ein Schneckengewinde aufweist, das in das erste und dritte Element (6, 16') eingreifen kann und gemäß einer gleichen Windungsrichtung gleichmäßig auf den Abschnitten des zweiten Elements (8) verteilt ist.

10. Aktuator nach Anspruch 9, **dadurch gekennzeichnet, dass** der Getriebemechanismus ein erstes gezahntes Glied (11') und ein zweites gezahntes Glied (12') umfasst, die um Achsen (Y1, Y2) rotierbar sind, die relativ zur Hauptrotationsachse (X) parallel und exzentrisch sind, wobei das erste gezahnte Glied (11') in das erste Element (6) einrückt, wobei das zweite gezahnte Glied (12') in das dritte Element (16') und in das erste gezahnte Glied (11') einrückt.

11. Aktuator nach Anspruch 10, **dadurch gekennzeichnet, dass** die Rotationsachsen (Y1, Y2) des ersten und zweiten gezahnten Glieds (11', 12') im Wesentlichen gleich von der Hauptrotationsachse (X) beabstandet sind.

12. Aktuator nach einem oder mehreren der Ansprüche 9 bis 12, **dadurch gekennzeichnet, dass** der Getriebemechanismus ein festes, nicht-unitäres Übersetzungsverhältnis zwischen dem ersten (6) und dem dritten Element (16') erreicht, wobei das Übersetzungsverhältnis vorzugsweise zwischen 2 und 72 beträgt.

13. Aktuator nach einem oder mehreren der Ansprüche 9 bis 13, **dadurch gekennzeichnet, dass** das dritte Element (16') ausschließlich durch Rotation um die Hauptrotationsachse (X) beweglich ist und gemeinsam mit dem ersten und zweiten Element (6, 8) eine Änderung der Rotationsgeschwindigkeit vom ersten Element (6) zum zweiten Element (8) erreicht.

14. Linearer elektromechanischer Aktuator, umfassend:
- eine Abdeckstruktur (2);
- ein erstes Element (6), das auf der Abdeckstruktur (2) befestigt und um eine Hauptrotationsachse (X) rotierbar ist, wobei das erste Element (6) mit einem Elektromotor verbindbar ist, um ein Antriebsdrehmoment zu empfangen;
- ein zweites Element (8), das auf der Abdeckstruktur (2) entlang der Hauptrotationsachse (X) befestigt und drehbar mit dem ersten Element (6) durch Verschraubung verkoppelt ist, um eine Vorwärtsbewegung entlang der Hauptrotationsachse (X) in Folge einer Rotation des ersten Elements (6) zu empfangen, wobei das zweite Element (8) ein Translationselement des Aktuators definiert;
wobei das zweite Element (8) zudem relativ zur Abdeckstruktur (2) um die Hauptrotationsachse (X) rotierbar ist, wobei der Aktuator (1) ferner Antriebsmittel (10) umfasst, die zumindest auf das zweite Element (8) einwirken, um derart eine Rotationsgeschwindigkeit des zweiten Elements (8) um die Hauptrotationsachse (X) zu verursachen, dass die Geschwindigkeit der Vorwärtsbewegung des zweiten Elements (8) entlang der Hauptrotationsachse (X) verursacht wird;
wobei die Antriebsmittel (10) ein drittes Element (16'; 16"; 16"') umfassen, das an der Abdeckstruktur (2) angebracht ist und derart im Eingriff in das zweite Element (8) durch Verschraubung um die Hauptrotationsachse (X) steht, dass in Folge einer relativen Rotation zwischen dem zweiten und dritten Element (8, 16'; 16" ; 16"') das zweite Element (8) entlang der Hauptrotationsachse (X) verschoben wird, wobei die simultane Verkopplung des zweiten Elements (8) mit dem ersten und dritten Element (6, 16'; 16" ; 16"') automatisch eine Rotationsgeschwindigkeit des zweiten Elements (8) verursacht, die sich von der Rotationsgeschwindigkeit des ersten Elements (6) unterscheidet.

15. Aktuator nach Anspruch 14, **dadurch gekennzeichnet, dass** das erste und dritte Element (6, 16') jeweils an entsprechende Abschnitte des zweiten Elements (8) angepasst sind, wobei die Abschnitte aufeinanderfolgend entlang der Hauptrotationsachse (X) angeordnet sind.

16. Aktuator nach Anspruch 15, **dadurch gekennzeichnet, dass** die Abschnitte des zweiten Elements (8) jeweilige Gewinde aufweisen, die gemäß Windungsrichtungen verteilt sind, die gegensätzlich zueinander sind, wobei die Gewinde jeweils in entsprechende Gewinde eingreifen können, die jeweils auf dem ersten und dem dritten Element (6, 16") erhalten sind.

17. Aktuator nach Anspruch 14, **dadurch gekennzeichnet, dass** das zweite Element (8) an das erste Element (6) angepasst ist, wobei das dritte Element (16"') außerhalb an das zweite Element (8) angepasst ist.

18. Aktuator nach Anspruch 17, **dadurch gekennzeichnet, dass** das zweite Element (8) ein Innengewinde aufweist, das zum ersten Element (6) ausgerichtet ist, sowie ein Außengewinde, das zum dritten Element (16") ausgerichtet ist, wobei das Innen- und das Außengewinde gemäß gegenseitig nicht übereinstimmender Windungsrichtungen verteilt sind.

19. Aktuator nach einem oder mehreren der vorangehenden Ansprüche 1 bis 18, wobei die Antriebsmittel (10) dem zweiten Element (8) eine Rotationsgeschwindigkeit auferlegen, die relativ zur Hauptrotationsachse (X) ist, die nicht Null ist und sich von der Rotationsgeschwindigkeit des ersten Elements (6) unterscheidet, um die unterschiedliche Rotationsgeschwindigkeit zwischen dem ersten und zweiten Element (6, 8) zu ermöglichen, um eine Axialverschiebung des zweiten Elements (8) auszulösen.

20. Aktuator nach einem oder mehreren der vorangehenden Ansprüche 1 bis 19, wobei die Antriebsmittel (10) die Rotationsgeschwindigkeit des zweiten Elements (8) in Abhängigkeit der Rotationsgeschwindigkeit des ersten Elements (6) verursachen.

21. Aktuator nach einem oder mehreren der vorangehenden Ansprüche 1 bis 18, wobei das erste Element (6) ausschließlich gemäß einer Rotationsbewegung um die Hauptrotationsachse (X) beweglich ist, wobei das zweite Element (8) gemäß einer Schraubbewegung entlang der Hauptrotationsachse (X) beweglich ist, um relativ zum ersten Element (6) in Folge einer gegenseitigen Rotation zwischen dem ersten und zweiten Element (6, 8) zu gleiten.

22. Aktuator nach einem oder mehreren der vorangehenden Ansprüche 1 bis 21, wobei das zweite Element (8) innerhalb des ersten Elements (6) rotierbar eingefügt ist.

23. Aktuator nach einem oder mehreren der vorangehenden Ansprüche 1 bis 22, wobei das erste und zweite Element (6, 8) gegenseitig mithilfe einer Schraubenmutter-Schrauben-Verbindung verkoppelt sind.

24. Aktuator nach einem oder mehreren der vorangehenden Ansprüche 9 bis 18, wobei das zweite und dritte Element (8, 16, 16" , 16"') gegenseitig mithilfe einer Schraubenmutter-Schrauben-Verbindung verkoppelt sind.

25. Aktuator nach Anspruch 23 oder 24, **dadurch gekennzeichnet, dass** die Schraubenmutter-Schrauben-Verbindung eine Kugelgewindeverbindung umfasst.

26. Aktuator nach einem oder mehreren der vorangehenden Ansprüche 1 bis 25, wobei die Hauptrotationsachse (X) fest ist.

27. Aktuator nach einem oder mehreren der vorangehenden Ansprüche 1 bis 26, wobei das erste Element (6) an seiner Außenfläche stabil mit dem Rotor (5) des Elektromotors verbunden ist.

28. Aktuator nach einem oder mehreren der vorangehenden Ansprüche 1 bis 27, wobei das erste Element (8) koaxial zum Elektromotor rotiert.

29. Aktuator nach einem oder mehreren der vorangehenden Ansprüche 1 bis 28, wobei der Elektromotor vollständig in der Abdeckstruktur (2) enthalten ist.

30. Aktuator nach einem oder mehreren der vorangehenden Ansprüche 1 bis 29, wobei er ein Abdeckelement (9) umfasst, das rotierbar an ein vorderes Ende des zweiten Elements (8) anschließt, um die vom zweiten Element (8) ausgeübte Schubkraft unabhängig von der Rotation des zweiten Elements (8) zu übertragen.

31. Bremssattel für ein Fahrzeug, umfassend einen Aktuator (1) nach einem oder mehreren der vorangehenden Ansprüche 1 bis 30.

## Revendications

1. Actionneur linéaire électromécanique comprenant :
- une structure de couverture (2) ;
- un premier élément (6), monté sur la structure de couverture (2) et pouvant tourner autour d'un axe principal de rotation (X), ledit premier élément (6) pouvant être connecté à un moteur électrique pour recevoir un couple moteur ;
- un second élément (8), monté sur la structure de couverture (2) le long dudit axe principal de rotation (X) et accouplé de manière pivotante au premier élément (6) par vissage pour recevoir un mouvement d'avance le long dudit axe principal de rotation (X), suite à une rotation du premier élément (6), ledit second élément (8) formant un élément de translation dudit actionneur ;
dans lequel ledit second élément (8) peut également tourner, par rapport à la structure de couverture (2), autour dudit axe principal de rotation (X), ledit actionneur (1) comprenant également des moyens d'actionnement (10), actifs au moins sur ledit second élément (8) pour déterminer une vitesse de rotation du second élément (8) autour dudit axe principal de rotation (X), afin de déterminer la vitesse d'avance du second élément (8) le long dudit axe principal de rotation (X) ;
dans lequel lesdits moyens d'actionnement (10) comprennent un mécanisme à engrenages monté sur la structure de couverture (2) et interposé entre les premier et second éléments (6, 8), et
dans lequel ledit mécanisme à engrenages comprend un premier organe denté (11) et un second organe denté (12), ledit premier organe denté (11) étant en prise par engrènement avec ledit premier élément (6), ledit second organe denté (12) étant fixé sur le second élément (8) et étant en prise par engrènement avec ledit premier organe denté (11),
l'actionneur **se caractérisant en ce que** ledit premier organe denté (11) présente une denture extérieure uniforme ayant un tel développement, le long de l'axe principal de rotation (X), qu'elle reste réciproquement en engrènement avec le premier organe denté (11) et avec le second organe denté (12) pendant le déplacement du second élément (8) le long de l'axe principal de rotation (X).

2. Actionneur selon la revendication 1, **caractérisé en ce que** ledit mécanisme à engrenages instaure un rapport de transmission fixe, non unitaire, entre les premier et second éléments (6, 8).

3. Actionneur selon la revendication 2, **caractérisé en ce que** ledit mécanisme à engrenages instaure un rapport de transmission, entre les premier et second éléments (6, 8), compris entre 2 et 72.

4. Actionneur selon la revendication 1, **caractérisé en ce que** ledit premier organe denté (11) peut tourner autour d'un axe (Y) qui est parallèle et excentrique par rapport audit axe principal de rotation (X), ledit second organe denté (12) pouvant tourner autour dudit axe principal de rotation (X).

5. Actionneur selon la revendication 4, **caractérisé en ce que** l'axe de rotation (Y) du premier organe denté (11) est fixe.

6. Actionneur selon les revendications 4 ou 5, **caractérisé en ce que** ledit mécanisme à engrenages comprend une pluralité de premiers organes dentés (11), pouvant tourner autour d'axes de rotation (Y) respectifs, qui sont parallèles audit axe principal de rotation (X) et placés autour dudit axe principal de rotation (X).

7. Actionneur selon la revendication 1, **caractérisé en ce que** ledit premier élément (6) et ledit second organe denté (12) ont des dentures respective pouvant être en prise par engrènement avec ledit premier organe denté (11), la denture (13) du premier élément (6) et la denture du second organe denté (12) présentant des propriétés géométriques réciproquement différentes pour obtenir une vitesse de rotation différente entre ledit premier élément (6) et ledit second organe denté (12).

8. Actionneur selon la revendication 7, **caractérisé en ce que** lesdites propriétés géométriques différentes sont obtenues en modifiant la saillie et/ou le creux de la denture (13) du premier élément (6) par rapport à la saillie et/ou au creux de la denture du second organe denté (12).

9. Actionneur linéaire électromécanique comprenant :
- une structure de couverture (2) ;
- un premier élément (6), monté sur la structure de couverture (2) et pouvant tourner autour d'un axe principal de rotation (X), ledit premier élément (6) pouvant être connecté à un moteur électrique pour recevoir un couple moteur ;
- un second élément (8), monté sur la structure de couverture (2) le long dudit axe principal de rotation (X) et accouplé de manière pivotante au premier élément (6) par vissage pour recevoir un mouvement d'avance le long dudit axe principal de rotation (X), suite à une rotation du premier élément (6), ledit second élément (8) formant un élément de translation dudit actionneur ;
dans lequel ledit second élément (8) peut également tourner, par rapport à la structure de couverture (2), autour dudit axe principal de rotation (X), ledit actionneur (1) comprenant également des moyens d'actionnement (10), actifs au moins sur ledit second élément (8) pour déterminer une vitesse de rotation du second élément (8) autour dudit axe principal de rotation (X), afin de déterminer la vitesse d'avance du second élément (8) le long dudit axe principal de rotation (X) ;
dans lequel lesdits moyens d'actionnement (10) comprennent un mécanisme à engrenages monté sur la structure de couverture (2) et interposé entre les premier et second éléments (6, 8),
dans lequel lesdits moyens d'actionnement (10) comprennent un troisième élément (16'; 16"; 16"') en prise avec ledit second élément (8) par vissage autour dudit axe principal de rotation (X) de sorte que, suite à une rotation respective entre lesdits second et troisième éléments (8, 16'; 16" ; 16"'), ledit second élément (8) subit un déplacement le long dudit axe principal de rotation (X), l'accouplement simultané dudit second élément (8) avec lesdits premier et troisième éléments (6, 16'; 16"; 16"') déterminant automatiquement une vitesse de rotation du second élément (8) différente de la vitesse de rotation du premier élément (6),
dans lequel ledit troisième élément (16') peut tourner autour dudit axe principal de rotation (X), ledit mécanisme à engrenages étant interposé entre lesdits premier et troisième éléments (6, 16') pour entraîner en rotation ledit troisième élément (16') suite à la rotation du premier élément (6),
dans lequel ledit mécanisme à engrenages entraîne en rotation ledit troisième élément (16') dans la direction opposée à celle dudit premier élément (6), et dans lequel lesdits premier et troisième éléments (6, 16') sont positionnés sur des parties respectives dudit second élément (8), placées à la suite le long dudit axe principal de rotation (X),
**caractérisé en ce que** ledit second élément (8) présente un filet hélicoïdal pouvant se mettre en prise avec les premier et troisième éléments (6, 16') et distribué uniformément, dans une même direction d'enroulement, sur lesdites parties du second élément (8).

10. Actionneur selon la revendication 9, **caractérisé en ce que** ledit mécanisme à engrenages comprend un premier organe denté (11') et un second organe denté (12') pouvant tourner autour d'axes (Y1, Y2) parallèles et excentriques par rapport audit axe principal de rotation (X), ledit premier organe denté (11') s'engrenant avec ledit premier élément (6), ledit second organe denté (12') s'engrenant avec ledit troisième élément (16') et avec ledit premier organe denté (11').

11. Actionneur selon la revendication 10, **caractérisé en ce que** les axes de rotation (Y1, Y2) desdits premier et second organes dentés (11', 12') sont essentiellement équidistants dudit axe principal de rotation (X).

12. Actionneur selon l'une ou plusieurs des revendications 9 à 12, **caractérisé en ce que** ledit mécanisme à engrenages instaure un rapport de transmission fixe, non unitaire, entre ledit premier élément (6) et ledit troisième élément (16'), ledit rapport de transmission étant de préférence compris entre 2 et 72.

13. Actionneur selon l'une ou plusieurs des revendications 9 à 13, **caractérisé en ce que** ledit troisième élément (16') peut se déplacer exclusivement par rotation autour dudit axe principal de rotation (X) et occasionne, en coopération avec lesdits premier et second éléments (6, 8), un changement dans la vitesse de rotation dudit premier élément (6) audit second élément (8).

14. Actionneur linéaire électromécanique comprenant :
- une structure de couverture (2) ;
- un premier élément (6), monté sur la structure de couverture (2) et pouvant tourner autour d'un axe principal de rotation (X), ledit premier élément (6) pouvant être connecté à un moteur électrique pour recevoir un couple moteur ;
- un second élément (8), monté sur la structure de couverture (2) le long dudit axe principal de rotation (X) et accouplé de manière pivotante au premier élément (6) par vissage pour recevoir un mouvement d'avance le long dudit axe principal de rotation (X), suite à une rotation du premier élément (6), ledit second élément (8) formant un élément de translation dudit actionneur ;
dans lequel ledit second élément (8) peut également tourner, par rapport à la structure de couverture (2), autour dudit axe principal de rotation (X), ledit actionneur (1) comprenant également des moyens d'actionnement (10), actifs au moins sur ledit second élément (8), pour déterminer une vitesse de rotation du second élément (8) autour dudit axe principal de rotation (X), afin de déterminer la vitesse d'avance du second élément (8) le long dudit axe principal de rotation (X) ;
dans lequel lesdits moyens d'actionnement (10) comprennent un troisième élément (16'; 16" ; 16" ') fixé sur ladite structure de couverture (2) et en prise avec ledit second élément (8) par vissage autour dudit axe principal de rotation (X) de sorte que, suite à une rotation respective entre lesdits second et troisième éléments (8, 16' ; 16" ; 16"'), ledit second élément (8) subit un déplacement le long dudit axe principal de rotation (X), l'accouplement simultané dudit second élément (8) avec lesdits premier et troisième éléments (6, 16'; 16"; 16"') déterminant automatiquement une vitesse de rotation du second élément (8) différente de la vitesse de rotation du premier élément (6).

15. Actionneur selon la revendication 14, **caractérisé en ce que** lesdits premier et troisième éléments (6, 16') sont positionnés respectivement sur des parties respectives dudit second élément (8), lesdites parties étant placées à la suite le long dudit axe principal de rotation (X).

16. Actionneur selon la revendication 15, **caractérisé en ce que** lesdites parties du second élément (8) présentent des filets respectifs, distribués dans des directions d'enroulement réciproquement opposées, lesdits filets pouvant se mettre en prise avec des filets correspondants réalisés respectivement sur les premier et troisième éléments (6, 16").

17. Actionneur selon la revendication 14, **caractérisé en ce que** ledit second élément (8) est positionné sur ledit premier élément (6), ledit troisième élément (16"') étant positionné à l'extérieur dudit second élément (8).

18. Actionneur selon la revendication 17, **caractérisé en ce que** ledit second élément (8) présente un filet intérieur orienté vers le premier élément (6), et un filet extérieur orienté vers le troisième élément (16"'), lesdits filets intérieur et extérieur étant distribués dans des directions d'enroulement réciproquement discordantes.

19. Actionneur selon l'une ou plusieurs des revendications précédentes 1 à 18, dans lequel lesdits moyens d'actionnement (10) imposent audit second élément (8) une vitesse de rotation, par rapport audit axe principal de rotation (X), qui n'est pas nulle et est différente de la vitesse de rotation dudit premier élément (6), pour permettre à la vitesse de rotation différente entre le premier et le second éléments (6, 8) d'entraîner un déplacement axial du second élément (8).

20. Actionneur selon l'une ou plusieurs des revendications précédentes 1 à 19, dans lequel lesdits moyens d'actionnement (10) déterminent la vitesse de rotation du second élément (8) en fonction de la vitesse de rotation du premier élément (6).

21. Actionneur selon l'une ou plusieurs des revendications précédentes 1 à 18, dans lequel ledit premier élément (6) peut se déplacer exclusivement selon un mouvement de rotation autour dudit axe principal de rotation (X), ledit second élément (8) pouvant se déplacer selon un mouvement de vissage le long dudit axe principal de rotation (X) pour coulisser par rapport au premier élément (6) suite à une rotation réciproque entre lesdits premier et second éléments (6, 8).

22. Actionneur selon l'une ou plusieurs des revendications précédentes 1 à 21, dans lequel ledit second élément (8) est inséré de manière pivotante dans ledit premier élément (6).

23. Actionneur selon l'une ou plusieurs des revendications précédentes 1 à 22, dans lequel lesdits premier et second éléments (6, 8) sont réciproquement accouplés par un accouplement vis-vis écrou.

24. Actionneur selon l'une ou plusieurs des revendications précédentes 9 à 18, dans lequel lesdits second et troisième éléments (8, 16; 16"; 16"') sont réciproquement accouplés par un accouplement vis-vis écrou.

25. Actionneur selon les revendications 23 ou 24, **caractérisé en ce que** ledit accouplement vis-vis écrou comprend un accouplement vis à billes à filet.

26. Actionneur selon l'une ou plusieurs des revendications précédentes 1 à 25, dans lequel ledit axe principal de rotation (X) est fixe.

27. Actionneur selon l'une ou plusieurs des revendications précédentes 1 à 26, dans lequel ledit premier élément (6) est connecté stablement, sur sa propre surface extérieure, au rotor (5) dudit moteur électrique.

28. Actionneur selon l'une ou plusieurs des revendications précédentes 1 à 27, dans lequel ledit premier élément (8) tourne coaxialement par rapport audit moteur électrique.

29. Actionneur selon l'une ou plusieurs des revendications précédentes 1 à 28, dans lequel ledit moteur électrique est totalement contenu dans ladite structure de couverture (2).

30. Actionneur selon l'une ou plusieurs des revendications précédentes 1 à 29, **caractérisé en ce qu'**il comprend un élément de couverture (9), associé de façon rotative à une extrémité antérieure dudit second élément (8) pour transmettre la poussée exercée par le second élément (8), indépendamment de la rotation dudit second élément (8).

31. Étrier de frein pour un véhicule, comprenant un actionneur (1) selon l'une ou plusieurs des revendications précédentes 1 à 30.
